# FASCICULE DE BREVET EUROPEEN

(11) **EP 1 340 422 B1**
(45) Date de publication et mention de la délivrance du brevet: **26.12.2007**
(21) Numéro de dépôt: 03290443.5
(22) Date de dépôt: 25.02.2003
(51) Int. Cl.: A01G 17/14

(54) **Piquet de vigne**
Rebepfahl
Vine prop

(30) Priorité: 27.02.2002 FR 0202483
(43) Date de publication de la demande: 03.09.2003
(73) Titulaire: PROFILAFROID, 60930 Bailleul sur Therain (FR)
(72) Inventeur: Siegfried, Jean-Michel, 60510 Bresles (FR)
(74) Mandataire: Geismar, Thierry

(56) Documents cités:
- FR-A- 2 311 497
- FR-A- 2 503 532
- FR-A- 2 570 575
- FR-A- 2 611 428

## Description

L'invention concerne un piquet de vigne pour la fixation d'au moins un fil métallique, et plus particulièrement un tel piquet comprenant au moins une aile de fixation comportant au moins un linguet support de fil, ledit linguet présentant une face intérieure située à une certaine distance d'une face extérieure de l'aile pour permettre le passage du fil entre lesdites faces.

On connaît un tel piquet par le document FR-A-2570575. Ce piquet de vigne donne généralement satisfaction mais présente toutefois un inconvénient lorsque la récolte est effectuée à l'aide de machines à vendanger.

Ces machines comportent un châssis enjambeur délimitant un tunnel permettant, lors du déplacement de la machine, le passage d'un rang de pieds de vigne et des piquets et fils qui le supportent. Des batteurs mobiles, généralement horizontaux, sont fixés aux parois du tunnel de manière à provoquer la chute des raisins sur un convoyeur sans fin qui les transporte jusqu'à un récipient de stockage.

L'inconvénient résulte du fait que les batteurs frappent également les fils de support, notamment dans leur zone proche des piquets contre lesquels aussi bien les fils que les batteurs peuvent s'endommager.

La présente invention vise à pallier cet inconvénient.

Plus particulièrement, l'invention vise à fournir des piquets de vigne assurant dans une meilleure mesure que ceux de l'art antérieur l'intégrité des fils de support ainsi que celle des batteurs lors de vendanges mécanisées.

L'invention vise également à fournir de piquets de vignes de plus grande résistance mécanique que ceux de l'art antérieur.

A cet effet, l'invention a pour objet un piquet de vigne pour la fixation d'au moins un fil métallique, comprenant au moins une aile de fixation, comportant au moins un linguet support de fil, ledit linguet présentant une face intérieure située à une certaine distance d'une face extérieure de l'aile pour permettre le passage du fil entre lesdites faces, caractérisée par le fait que ladite aile possède une nervure longitudinale de protection du fil, sensiblement perpendiculaire à la direction de passage du fil, ladite nervure de protection étant en saillie de la face extérieure de l'aile d'une hauteur au moins égale à ladite distance et possédant, au niveau dudit linguet, un renfoncement de passage du fil dont le fond est sensiblement dans le plan de la face externe de l'aile.

Au moins dans la zone du piquet, le fil métallique est maintenu par le linguet en saillie de la face externe de l'aile à distance au plus égale à celle qui sépare la face interne du linguet de la face externe de l'aile.

La nervure ayant une hauteur au moins égale à cette distance, c'est elle qui reçoit les éventuels chocs des batteurs des machines à vendanger assurant ainsi la protection du fil métallique. De plus, les batteurs ne risquent plus de s'accrocher dans les linguets, réduisant ainsi les risques de rupture.

Par ailleurs, lorsque le fil métallique est engagé dans le renfoncement de la nervure, celle-ci favorise son maintien par le linguet.

Dans un mode de réalisation particulier, le piquet de vigne selon l'invention comporte deux ailes de fixation reliées par une âme formant avec les deux ailes un profilé à section généralement en U.

Plus particulièrement, les nervures de protection peuvent s'étendre le long des bords des ailes opposées à leur bord de liaison à l'âme.

Egalement dans un mode de réalisation particulier, les linguets s'étendent dans la direction de ladite nervure de protection de manière à déborder longitudinalement de l'ouverture du renfoncement.

Ainsi, dans les zones de renfoncement où la nervure n'assure plus directement la protection du fil métallique, cette protection est assurée par le fait que le fil est recouvert à son extérieur par le linguet.

Les nervures de protection peuvent avoir une section transversale généralement triangulaire.

Plus particulièrement, l'arête extérieure de ces nervures de protection peut être arrondie de manière à éviter l'endommagement des batteurs des machines à vendanger.

Le bord de la nervure de protection opposé au linguet peut former un bord longitudinal de l'aile de fixation.

Ce bord peut en particulier être rabattu du côté de la face de l'aile opposée au linguet.

On observera en outre que, contrairement au cas de l'art antérieur, les linguets ne sont pas découpés dans les zones les plus travaillantes du piquet, celles-ci étant en effet, dans l'invention, les nervures de protection plus éloignées de la fibre neutre du piquet. On obtient donc des piquets de plus grande résistance.

On décrira maintenant à titre d'exemple non limitatif un mode de réalisation particulier de l'invention en référence aux dessins schématiques annexés dans lesquels :
- La figure 1 est une vue en perspective d'un tronçon de piquet de vigne selon l'invention.
- La figure 2 en est une vue en coupe transversale.
- La figure 3 est une vue similaire à celle de la figure 2 dans laquelle ont voit en outre deux fils fixés au piquet.
- La figure 4 est une vue de face partielle de ce piquet.
- La figure 5 est une vue représentant le détail V de la figure 4 à plus grande échelle.
- La figure 6 est une vue partielle de côté de ce piquet à encore plus grande échelle.
- La figure 7 représente en perspective deux piquets selon l'invention sur lesquels sont installés un ensemble de fils métalliques.

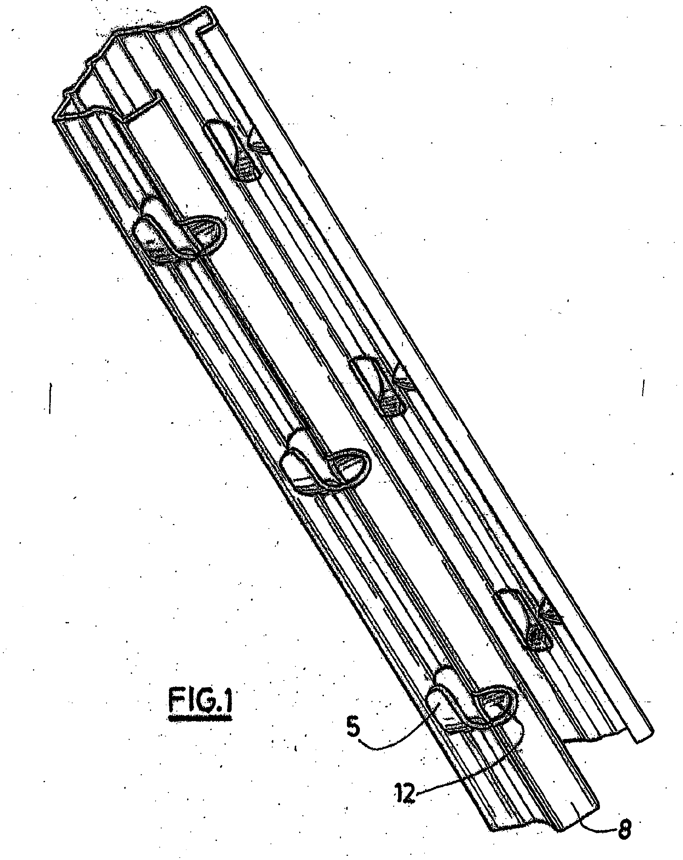

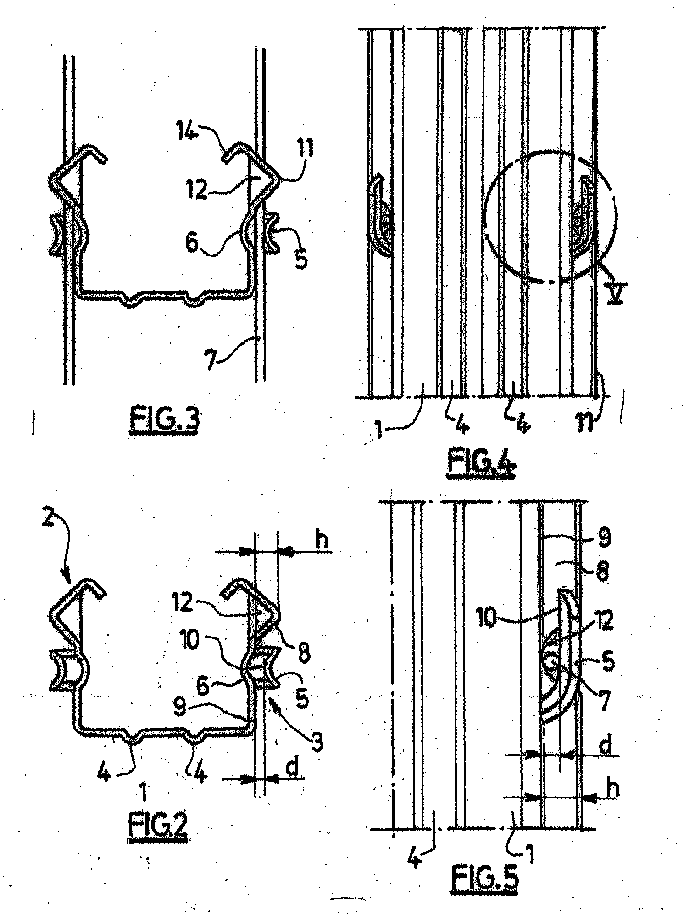

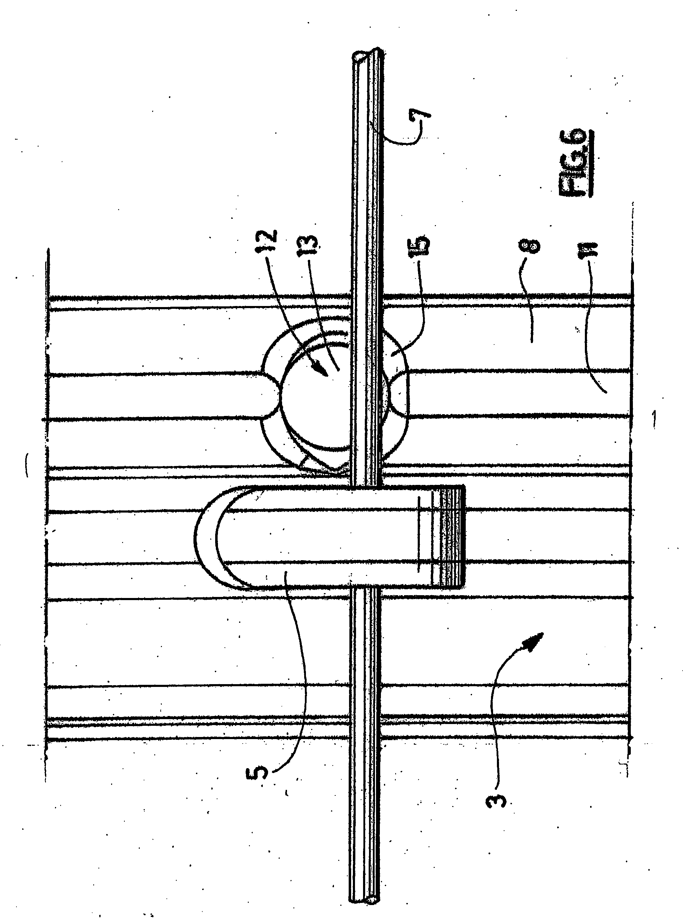

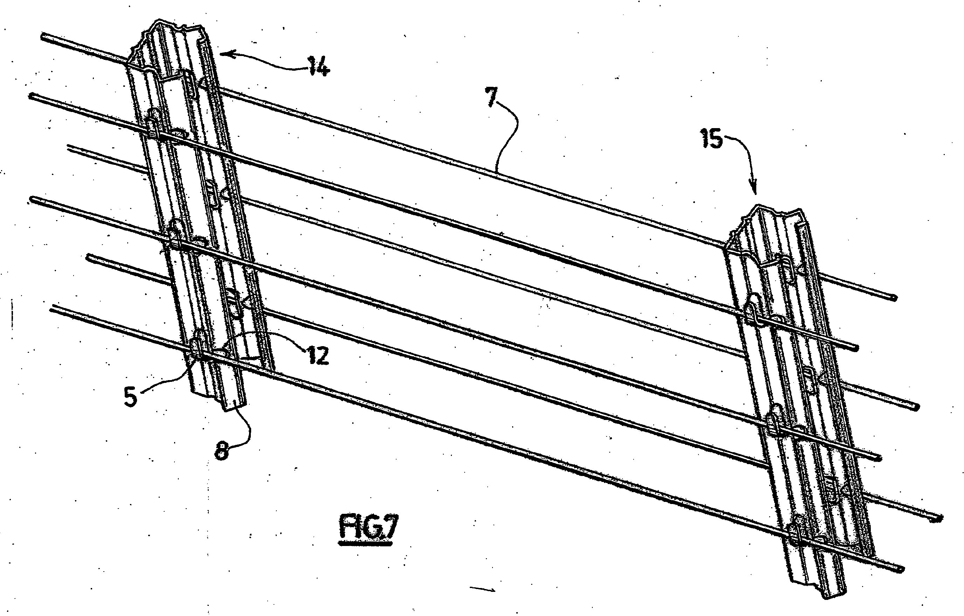

On voit, notamment à la figure 2, que le piquet selon l'invention se présente généralement comme un profilé en U formé d'une âme 1 et de deux ailes 2 et 3 reliées à l'âme le long d'un de leurs bords longitudinaux.

L'âme 1 est munie, de façon connue, de nervures de raidissement 4. Les ailes 2 et 3 sont munies de linguets 5 réalisés par découpage et emboutissage.

Ces linguets 5 sont formés dans une zone de nervure longitudinale 6 de l'aile en renfoncement de cette dernière du côté opposé aux linguets.

Ainsi le fil 7 supporté par le linguet est tenu à distance des bords de la découpe de manière à éviter son endommagement par d'éventuelles bavures.

De même, le linguet présente une courbure de même sens que celle de la nervure 6, de manière à présenter une surface de maintien du fil 7 qui soit lisse.

Cette forme des linguets assure une bonne tenue du fil qui est sollicité par les efforts dus au vent par l'intermédiaire de la vigne. Il en résulte une moindre usure des fils.

Ces agencements sont décrits en détail dans le document FR - A-2570575 précité.

Le long de leurs bords opposés à l'âme 1, les ailes 2 et 3 présentent chacune une nervure 8 de section triangulaire.

Chaque nervure 8 possède une hauteur h au dessus de la face extérieure 9 de l'aile de fixation au moins égale à la distance d séparant cette face extérieure de la face intérieure 10 du linguet 5.

Ainsi lorsqu'un fil 7 est engagé sous un linguet 5, la partie la plus extérieure de sa surface ne dépasse pas en hauteur de la face extérieure 9 de l'aile plus que l'arête extérieure 11 de la nervure 8. Cette dernière assure donc la protection du fil 7 contre d'éventuels chocs avec les batteurs d'une machine à vendanger . Afin de permettre le passage des fils, les nervures 8 comportent au niveau des linguets 5 des renfoncements 12 dont les fonds 13 sont sensiblement au niveau de la face extérieure 9 des ailes.

Ces renfoncements permettent donc le passage des fils tout en améliorant leur maintien par les linguets 5.

Les linguets 5 dépassent longitudinalement de l'ouverture 15 des renfoncements 12.

On observera en outre qu'afin de ne pas endommager les batteurs des machines, les arêtes 11 des nervures 8 sont arrondies et que les bords des nervures qui forment en même temps le bord libre des ailes du profilé sont rabattus vers l'intérieur des ailes.

On voit enfin à la figure 7 un ensemble de deux piquets 14 et 15 selon l'invention supportant une pluralité de fils 7, ces fils étants fixés à l'aide des linguets 5 et traversant les renfoncements 12 ménagés dans les nervures de protection 8.

## Revendications

1. Piquet de vigne pour la fixation d'au moins un fil métallique, comprenant au moins une aile (3) de fixation comportant au moins un linguet (5) support de fil, ledit linguet présentant une face intérieure (10) située à une certaine distance d d'une face extérieure (9) de l'aile pour permettre le passage du fil entre lesdites faces, **caractérisé par le fait que** ladite aile possède, du côté dudit linguet, une nervure (8) longitudinale de protection du fil, sensiblement perpendiculaire à la direction de passage du fil, ladite nervure de protection étant en saillie de la face extérieure de l'aile d'une hauteur h au moins égale à ladite distance d et possédant au niveau dudit linguet un renfoncement (12) de passage du fil, dont le fond (13) est sensiblement dans le plan de la face externe de l'aile.

2. Piquet de vigne selon la revendication 1, **caractérisé par le fait qu**'il comporte deux ailes (2, 3) de fixation reliées à une âme (1) formant avec les deux ailes un profilé à section généralement en U.

3. Piquet de vigne selon la revendication 2, **caractérisé par le fait que** les nervures de protection s'étendent le long des bords des ailes (2, 3) opposée à leur bord de liaison à l'âme (1).

4. Piquet de vigne selon l'une quelconque des revendications 1 à 3, **caractérisé par le fait que** les linguets (5) s'étendent dans la direction de ladite nervure de protection (8) de manière à déborder longitudinalement de l'ouverture du renfoncement (12).

5. Piquet de vigne selon l'une quelconque des revendications 1 à 4, **caractérisé par le fait que** la nervure de protection a une section transversale généralement triangulaire.

6. Piquet de vigne selon la revendication 5, **caractérisé par le fait que** l'arête extérieure de la nervure de protection est arrondie.

7. Piquet de vigne selon l'une quelconque des revendications 1 à 6, **caractérisé par le fait que** le bord de la nervure de protection opposé au linguet forme un bord longitudinal de l'aile de fixation.

8. Piquet de vigne selon la revendication 7, **caractérisé par le fait que** le bord (14) de la nervure de protection opposé au linguet est rabattu du côté de la face de l'aile opposée au linguet.

## Claims

1. A vineyard post for fastening at least one metal wire, comprising at least one fastening wing (3) including at least one pawl (5) supporting the wire, said pawl having an inner face (10) located at a certain distance d from the outer face (9) of the wing to allow the passage of the wire between said faces, **characterized in that** said wing has, on said pawl side, a longitudinal wire protection rib (8), substantially perpendicular to the direction of the passage of the wire, said protection rib protruding from the wing outer face by a height h at least equal to said distance d and being provided, at the level of said pawl, with a recess (12) for the passage of the wire, the bottom (13) of which is substantially in the same plane as the wing outer face.

2. A vineyard post according to claim 1, **characterized in that** it includes two fastening wings (2,3) connected to a core (1) forming a generally U-shaped section with the two wings.

3. A vineyard post according to claim 2, **characterized in that** the protection ribs extend along the edges of the wings (2,3) opposite their edges for connection with the core (1).

4. A vineyard post according to any one of claims 1 to 3, **characterized in that** the pawls (5) extend in the direction of said protection rib (8) so as to longitudinally overlap the recess (12) opening.

5. A vineyard post according to any one of claims 1 to 4, **characterized in that** the protection rib has a generally triangular cross-section.

6. A vineyard post according to claim 5, **characterized in that** the outer ridge of the protection rib is rounded.

7. A vineyard post according to any one of claims 1 to 6, **characterized in that** the edge of the protection rib opposite the pawl forms a longitudinal edge of the fastening wing.

8. A vineyard post according to claim 7, **characterized in that** the edge (14) of the protection rib opposite the pawl is turned on the side of the wing face opposite the pawl.

## Patentansprüche

1. Rebstock für die Befestigung von mindestens einem Metalldraht, der zumindest einen Befestigungsflügel (3) umfaßt, der zumindest eine Drahtsicherung (10) umfaßt, wobei die besagte Sicherung eine Innenseite (10) aufweist, die sich in einem gewissen Abstand von einer Außenseite (9) des Flügels befindet, **dadurch gekennzeichnet, daß** der besagte Flügel an der Seite des besagten Flügels eine Längsrippe (8) zum Schutz des Drahts besitzt, die deutlich senkrecht zur Verlaufsrichtung des Drahts steht, wobei die besagte Schutzrippe von der Außenseite des Flügels mit einer Höhe h von mindestens gleich dem besagten Abstand d vorspringt und auf Höhe der besagten Sicherung eine Verstärkung (12) für den Drahtdurchgang besitzt, deren Boden (13) deutlich in der Ebene der Außenseite des Flügels ist.

2. Rebstock nach Anspruch 1, **dadurch gekennzeichnet, daß** er zwei Befestigungsflügel (2, 3) umfaßt, die mit einem Steg (1) verbunden sind, und der mit den beiden Flügeln ein Profil mit im allgemeinen einem U-förmigen Querschnitt bildet.

3. Rebstock nach Anspruch 2, **dadurch gekennzeichnet, daß** die Schutzrippen sich an den Flügelkanten (2, 3) entlang entgegengesetzt zu ihrer Verbindungskante mit dem Steg (1) erstrecken.

4. Rebstock nach einem beliebigen der vorstehenden Ansprüche 1 bis 3, **dadurch gekennzeichnet, daß** die Sicherungen (5) sich so in Richtung der besagten Schutzrippe (8) erstrecken, daß sie längs von der Öffnung der Verstärkung (12) überstehen.

5. Rebstock nach einem beliebigen der vorstehenden Ansprüche 1 bis 4, **dadurch gekennzeichnet, daß** die Schutzrippe einen im allgemeinen dreiseitigen Querschnitt hat.

6. Rebstock nach Anspruch 5, **dadurch gekennzeichnet, daß** der äußere Grat der Schutzrippe abgerundet ist.

7. Rebstock nach einem beliebigen der vorstehenden Ansprüche 1 bis 6, **dadurch gekennzeichnet, daß** die entgegengesetzt zur Sicherung verlaufende Kante der Schutzrippe eine Längskante des Befestigungsflügels bildet.

8. Rebstock nach Anspruch 7, **dadurch gekennzeichnet, daß** die Kante (14) der Schutzrippe entgegengesetzt zur Sicherung an der Seite des zur Sicherung entgegengesetzten Flügels abgeklappt ist.
